# EUROPEAN PATENT SPECIFICATION

(11) **EP 3 941 861 B1**
(45) Date of publication and mention of the grant of the patent: **06.12.2023**
(21) Application number: 20710025.6
(22) Date of filing: 13.03.2020
(51) Int. Cl.: B65G 54/02, B60L 13/00, B60L 13/03, B65G 47/91, B60L 5/00

(54) **CONVEYING APPARATUS**
FÖRDERVORRICHTUNG
APPAREIL DE TRANSPORT

(30) Priority: 18.03.2019 IT 201900003895
(43) Date of publication of application: 26.01.2022
(73) Proprietor: CFT S.p.A., 43122 Parma (IT)
(72) Inventor: CATELLI, Roberto, 43123 Parma (IT); EMANUELE, Troni, 25074 Idro (Brescia) (IT)
(74) Representative: Monelli, Alberto
(86) International application number: PCT/IB2020/052276
(87) International publication number: WO 2020/188430

(56) References cited:
- EP-A1- 2 760 770
- WO-A1-2017/149377
- US-A1- 2013 084 157

## Description

### Technical Field

The present invention relates to a conveying apparatus for conveying a packaging item, typically a package or a body to be shaped to obtain said package.

### Prior Art

Conveying apparatuses are known for conveying objects, comprising carriages that are movable along a path. A linear electric motor is built into a base of the path and interacts with a permanent magnet placed on the carriage. This enables the carriage to be moved along the path. In order to retain cardboard boxes used for packaging, templates with mechanical hooks are used. One drawback of this solution is linked to the fact that, when altering the size of the box to be moved, the template with the mechanical means has to be changed. This means that different templates have to be kept in the stores and there is inevitable tooling downtime at each size change.

In an alternative solution, at a suction station, the cardboard box is made to adhere to the carriage by negative pressure by valves placed on the carriage that are then shut. This negative pressure is created by a suction device located outside the carriage. One drawback of this solution is that during movement because of an impact, a jolt or for another reason the negative pressure is interrupted and the system is not able to restore the negative pressure and the cardboard box becomes detached from the carriage.

Another solution is disclosed by US 2013/084157 A1, which discloses a conveying apparatus according to the preamble of claim 1.

### Aim of the invention

In this context, the technical task underpinning the present invention is to provide a conveying apparatus for conveying a packaging item that enables correct movement to be facilitated.

A further object of the present invention is to enable maximum operating flexibility and to minimize maintenance operations.

The technical task set and the objects specified are substantially attained by an apparatus comprising the technical features as set out in the appended claims.

### Brief description of the drawings

Further features and advantages of the present invention will become more apparent from the approximate and thus non-limiting description of a preferred, but not exclusive, embodiment of an apparatus, as illustrated in the accompanying drawings, in which:
- figure 1 shows a perspective view of a conveying apparatus according to the present invention;
- figure 1a shows a detail of figure 1;

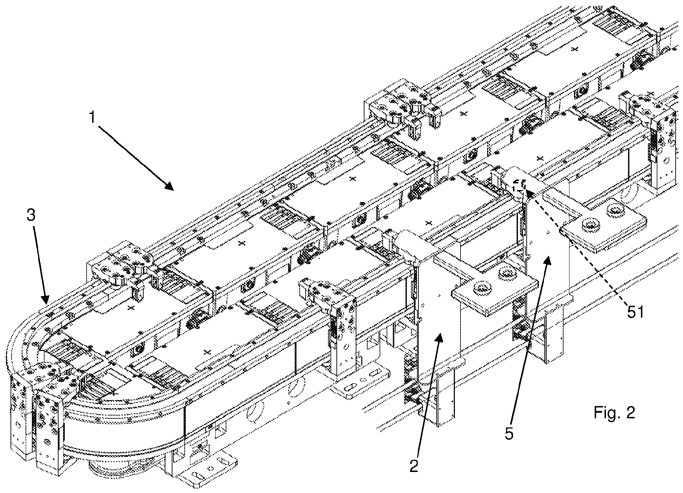

- figure 2 shows the solution of figure 1 with two conveyors fitted;

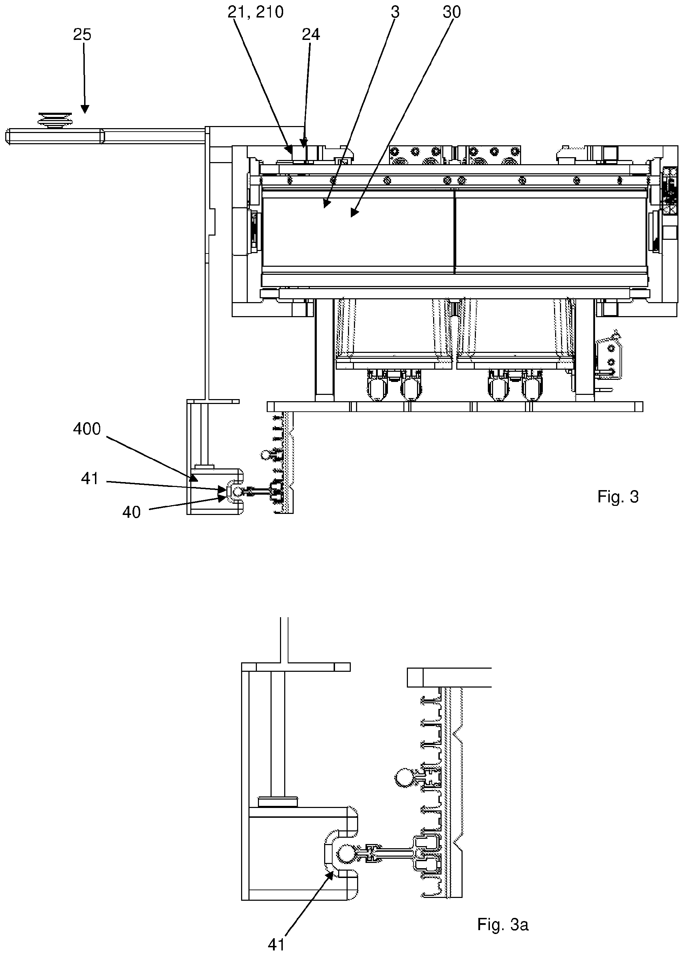

- figure 3 shows a component of the conveying apparatus of figures 1 and 2;
- figure 3a shows a detail of figure 3.

### Detailed description of preferred embodiments of the invention

In the accompanying drawings, reference number 1 indicates a conveying apparatus for a packaging item. For example, this packaging item is a box body to be filled or which is already filled or a package that is still to be formed. Typically, this package is substantially made of cardboard (it being understood that it is mainly made of cardboard, but can comprise joints with adhesive tape or glue or other materials).

This apparatus 1 comprises a first conveyor 2 movable and intended to move said packaging item. The first conveyor 2 comprises first magnetic field generating means 21. According to the invention, this first means 21 comprises/is a permanent magnet 210.

The first conveyor 2 can be a carriage. The first conveyor 2 comprises rest wheels for supporting weight. The apparatus 1 comprises a path 3 along which the first conveyor 2 is movable.

The path 3 comprises a linear motor 30. This motor 30 is a linear magnetic motor, in particular a linear servomotor. Typically, it is a linear brushless motor. The linear motor opportunely defines a smart system that is capable of being modulated and scaled that is propelled magnetically on a rail.

The linear motor 30 interacts with the first magnetic field generating means 21 in order to cause a linear displacement of the first conveyor 2 along the path 3.

The linear motor 30 is *per se* known. While in traditional electric motors the rotors and stators are circular, in the linear motor the stator extends along the path 3 and in place of the rotor there is the first generating means 21 on the first conveyor 2 (or on any other conveyors). The linear motor 30 thus has the effect of displacing the first conveyor 2. Opportunely, the path 3 could comprise at least one section that follows a curvilinear trajectory. Advantageously, the path 3 is a circuit that is closed on itself (thus defining a circuit trajectory for the first conveyor 2).

The linear motor 30 comprises electrical conduction means, for example one or more electric windings, that extend along the path 3 and generate an electromagnetic field that interacts with the magnetic field generated by the first means 21 to enable the first conveyor 2 to move along the path 3. The path 3 opportunely comprises guide means 7 for guiding the first conveyor 2 along the trajectory defined by the path 3 itself. For example, these guide means 7 can comprise a rail 70 (advantageously a monorail, but could also possibly be a binary rail). Opportunely, the first conveyor 2 follows the trajectory imposed by the rail 70. The guide means 7 enables the first conveyor 2 to overcome the curved sections of the trajectory defined by the path 3. For example, the first conveyor 2 could comprise wheels that facilitate running of the first conveyor 2 along the rail 70. For example, it could comprise at least one pair 71 of wheels astride the rail 70 (preferably a plurality of pairs of wheels astride the rail 70). The first conveyor 2 comprises an electrical utility 22. This electrical utility 22 is placed on the first conveyor 2.

According to the invention, the apparatus 1 comprises electrical power supply means 4 for powering said electrical utility 22. The power supply means 4 for powering the electrical utility 22 comprises contactless electrical power supply means 41 of the first conveyor 2. The contactless means 41 in turn comprises stator means 40 which extends along the path 3 and a cursor 400 that is solidly constrained to the first conveyor 2 and that interacts with the stator means 40. The stator means 40 can comprise at least one electrical cable 403. Opportunely, the stator means 40 (in particular the electrical cable 403) is distinct from the linear motor 30, in particular from the electrical conduction means disclosed above (for example from said windings) that are part of the linear motor 30. The cursor 400 faces a cross section of the stator means 40. The cursor 400 preferably extends around a cross section of the electrical cable 403 for more than 160°, preferably for more than 180°. Opportunely, the cursor 400 comprises an electric device (known in the technical field as a "pick up") that enables the current to be received contactlessly and the current that transits in the stator means 40 to be transformed to adapt the current to the specific needs (in terms of voltage and/or intensity and/or frequency) of the electrical utility 22. For example, the cursor enables the electric current to be rectified by transforming the alternating current of the stator means 40 into direct current. The stator means 40 extends over the entire extent of the path 3 (as better explained below, the stator means preferably comprise various stators, preferably a succession of annular stators). The contactless means 41 can be understood to be means for transferring electric energy from one part of the stator means 40 to the first conveyor 2 in order to be apply to power the utility 22. The contactless means 41 enables energy to be transmitted without contact between the two parties between which energy is transmitted. The contactless system can thus be defined as an individual system for transmitting energy for industrial applications without contact. The contactless means 41 is advantageously of a magnetic induction type. The contactless means thus exploits the principle of magnetic induction to transfer electric energy to the first conveyor 2. Once this electric energy has been made available to the first conveyor 2, it can be used to activate said electrical utility 22, which can be of different type. This electric energy can also be used to power several electrical utilities on the first conveyor 2.

The electrical utility 22 can advantageously comprise suction means 23 that retains the packaging item on the first conveyor 2. Thus the electric energy transferred to the first conveyor 2 by the contactless means 41 is used to power the suction means 23. This enables the packaging item to be stabilized on the first conveyor, preventing it from falling or becoming detached. Further, the first conveyor 2 can convey packaging items of various shapes or sizes without the need to replace mechanical hooking elements.

The electrical utility 22 could, as an addition or substitution, comprise a LED or mechanical gripping means (for example a gripper) or also something else.

The electrical utility 22 is not however responsible for the displacement of the first conveyor 2 along the path 3. The advancement of the first conveyor 2 is thus entrusted to the interaction between the linear motor 30 and the first magnetic field generating means 21 located on the first conveyor 2.

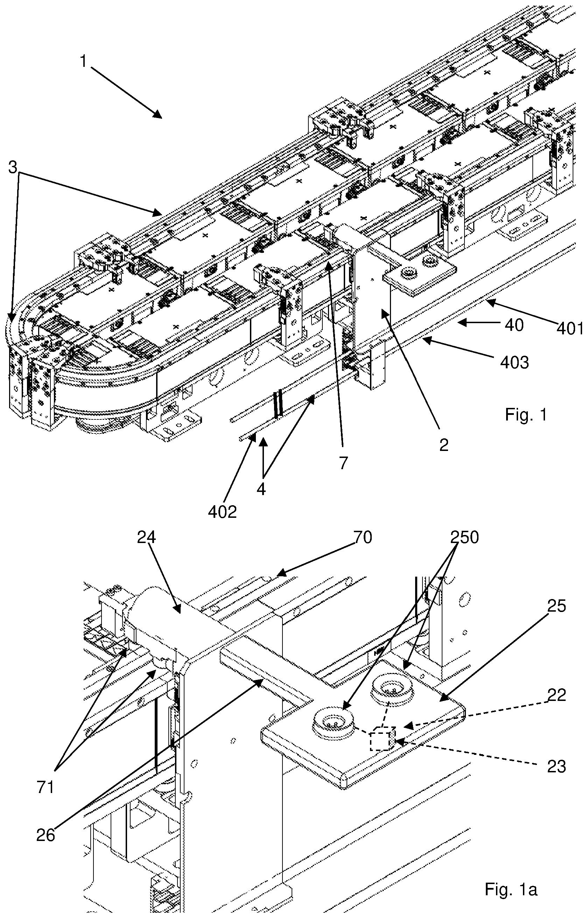

The first conveyor 2 as exemplified in figure 1a comprises:
- a base 24 that surmounts and interacts with the linear motor 30;
- a support 25 on which it is intended to rest the packaging item.

Opportunely, the support 25 is stably connected to the base 24 during normal operation. This support 25 advantageously comprises a flat upper surface on which the packaging item is intended to rest.

The support 25 comprises one or more holes 250 that enable the packaging item to be maintained adhering to the support 25. These holes are advantageously oriented upwards. In particular, the holes are obtained on the upper surface of the support 25.

The support 25 extends laterally in relation to the base 24. Opportunely, the first conveyor 2 comprises at least one arm 26 that connects the base 24 and the support 25. Opportunely, the arm 26 and the support 25 extend in cantilever fashion from the base 24. The support 25 is on an outer side of the path 3 (assuming that the path 3 is a circuit that is closed on itself).

The stator means 40 comprises at least one first and one second stator ring 401, 402 that extend in succession along the path 3; this does not rule out the possibility that there may be overlaps of the two rings in the joining zones. The first stator ring 401 for example can comprise:
- two sections placed for example one higher up than the other (they are advantageously substantially horizontal and are opportunely substantially parallel to one another); and
- two connection portions placed at opposite ends of these sections.

The first stator ring 401 can be/is powered independently of the second stator ring 402. The power supply of the first and second stator ring 401, 402 determines the power supply of the electrical utility 22 located on the first conveyor 2 when the first conveyor 2 comes to be respectively located at the first and second stator ring 401, 402; the lack of power supply to the first and second stator ring 401, 402 causes a lack of power supply to the electrical utility 22 when the first conveyor 2 comes to be located respectively at the first and second stator ring 401, 402.

Opportunely, the stator means 40 is located at a lower height than the support 25.

Opportunely, the apparatus 1 comprises a second conveyor 5 movable along the path 3. Also the second conveyor 5 comprises second magnetic field generating means 51 (typically a permanent magnet). The linear motor 30 interacts with the second magnetic field generating means 51 in order to determine a displacement of the second conveyor 5 along said path 3.

What has been disclosed with reference to the first conveyor 2 and/or its interaction with the remaining parts of the apparatus can be repeated for the second conveyor 5.

The stator means 40 can interact with both the first and the second conveyor 2, 5 to be able to transfer, if necessary, electric energy both to the first and to the second conveyor 2, 5.

The apparatus 1 comprises control means 6 of the linear motor 30 that enables independent movement of the first and second conveyor 2, 5.

For example, the first stator ring 401 could be located along a section of path 3 in which the second conveyor 5 has to advance whilst the second stator ring 402 can be located at a section of path 3 in which a removal station is located for removing the packaging item from the first conveyor 2. As a result, it can be decided to power the first stator ring 401 to enable the advancement of the second conveyor 5 and at the same time not to power the second stator ring 402, for example for avoiding operation of the suction means 23 and facilitating unloading of the packaging item onto the first conveyor 2 that is located in said removal station. Opportunely, the stator means 40 can also comprise a third stator ring and possibly also many others. This is in order to control with maximum flexibility the conveyors that operate simultaneously along the various sections of the path 3.

Further, the first and the second stator ring 401, 402 can be powered with an adjustable electric current to be able to activate the electrical utility 22 (in the case of the example the suction means 23) in a more or less energetic manner.

The apparatus 1 can comprise further conveyors (in addition to the first and second conveyor 2, 5 described above) that move simultaneously on the path 3. What has been disclosed with reference to the first conveyor 2 can also be repeated for the further conveyors.

The object of the present invention is further a plant comprising a conveying apparatus 1 having one or more of the features indicated above. Along said path 3, the plant can advantageously comprise a filling station of the container and/or a discharge station of the container (filled or possibly also empty).

The present invention achieves important advantages.

This enables the conveyors that move along the conveying systems to be electrified so as to enable many operations to be performed. This is also done without the need for a storage battery in the conveyors.

Opportunely, using the linear motor enables several carriages to be controlled independently on rectilinear and curvilinear paths, eliminating the need for chains, belts and rotating gears.

The contactless system enables operation without wear and with minimal maintenance.

## Claims

1. A conveying apparatus for conveying a packaging item comprising:
- a first conveyor (2) intended to move said packaging item and comprising first magnetic field generating means (21) and an electrical utility (22);
- a path (3) along which the first conveyor (2) is movable, said path (3) comprising a linear motor (30) which interacts with said first magnetic field generating means (21) so as to determine a linear displacement of the first conveyor (2) along said path (3); the magnetic field generating means (21) comprising/being a permanent magnet (210); the linear motor (30) comprises a stator that extends along the path (3);
- electrical power supply means (4) for powering said electrical utility (22) comprising electrical power supply contactless means (41) of the first conveyor (2); the contactless means (41) in turn comprises stator means (40) that extends along the path (3) and a cursor (400) that is solidly constrained to the first conveyor (2) and interacts with the stator means (40).

2. The apparatus according to claim 1, **characterized in that** said stator means (40) comprises at least one first and second stator ring (401, 402) that extend in succession along the path (3); the first stator ring (401) being powered independently of the second stator ring (402); the power supply of the first and second stator ring (401, 402) determining the power supply of the electrical utility (22) located on the first conveyor (2) when the first conveyor (2) is located respectively at the first and second stator ring (401, 402); the lack of power supply to the first and second stator ring (401, 402) causing the lack of power supply to the electrical utility (22) when the first conveyor (2) is located respectively at the first and second stator ring (401, 402).

3. The apparatus according to claim 1 or 2, **characterized in that** the stator means (40) is distinct from the linear motor (30).

4. The apparatus according to any claim from 1 to 3, **characterized in that** the cursor (400) faces a cross section of the stator means (40); the stator means (40) comprises at least one electrical cable (403) and the cursor (400) extends around a cross section of the electrical cable (403) for more than 160°.

5. The apparatus according to any claim from 1 to 4, **characterized in that** the stator means (40) extends over the entire extent of the path (3).

6. The apparatus according to any preceding claim, **characterized in that** the contactless means (41) is of a magnetic induction type.

7. The apparatus according to any preceding claim, **characterized in that** said electrical utility (22) is not responsible for the displacement of the first conveyor along the path (3).

8. The apparatus according to any preceding claim, **characterized in that** said electrical utility (22) comprises suction means (23) that retains the packaging item on the first conveyor (2).

9. The apparatus according to any one of the preceding claims, **characterised in that** it comprises:
- a second conveyor (5) movable along said path (3) and comprising second magnetic field generating means (51); said linear motor (30) interacting with the second magnetic field generating means (51) in order to determine a displacement of the second conveyor (5) along said path (3);
- control means (6) for controlling the linear motor (30) which enables an independent movement of the first and second conveyor (2, 5).

10. The apparatus according to any one of the preceding claims, **characterised in that** said path (3) is a circuit closed on itself.

11. A conveying method for conveying a packaging item by means of an apparatus according to any one of claims 1 to 10, **characterised in that** it comprises:
- positioning a packaging item on the first conveyor (2);
- activating said linear motor (30) for moving the first conveyor (2);
- transferring electrical energy via the contactless means (41) to the first conveyor (2) and powering the utility (22) with said electrical energy.

## Patentansprüche

1. Fördervorrichtung zum Fördern eines Verpackungsartikels, umfassend:
- einen ersten Förderer (2), der dazu bestimmt ist, den Verpackungsartikel zu bewegen und erste Magnetfelderzeugungsmittel (21) und einen elektrischen Verbraucher (22) umfasst;
- einen Weg (3), entlang dem der erste Förderer (2) beweglich ist, wobei der Weg (3) einen Linearmotor (30) umfasst, der mit den ersten Magnetfelderzeugungsmitteln (21) zusammenwirkt, um eine lineare Verschiebung des ersten Förderers (2) entlang des Wegs (3) zu bewirken; wobei die Magnetfelderzeugungsmittel (21) einen Permanentmagneten (210) umfassen/sind; wobei der Linearmotor (30) einen Stator umfasst, der sich entlang des Wegs (3) erstreckt;
- elektrische Stromversorgungsmittel (4) zum Versorgen des elektrischen Verbrauchers (22), umfassend kontaktlose elektrische Stromversorgungsmittel (41) des ersten Förderers (2); wobei die kontaktlosen Mittel (41) wiederum Statormittel (40), die sich entlang des Wegs (3) erstrecken, und einen Schieber (400) umfassen, der fest an dem ersten Förderer (2) festgespannt ist und mit den Statormitteln (40) zusammenwirkt.

2. Vorrichtung nach Anspruch 1, **dadurch gekennzeichnet, dass** die Statormittel (40) mindestens einen ersten und zweiten Statorring (401, 402) umfassen, die sich nacheinander entlang des Wegs (3) erstrecken; wobei der erste Statorring (401) unabhängig von dem zweiten Statorring (402) versorgt wird; wobei die Stromversorgung des ersten und zweiten Statorrings (401, 402) die Stromversorgung des elektrischen Verbrauchers (22) bewirkt, die sich auf dem ersten Förderer (2) befindet, wenn sich der erste Förderer (2) jeweils an dem ersten und zweiten Statorring (401, 402) befindet; wobei die fehlende Stromversorgung des ersten und zweiten Statorrings (401, 402) die fehlende Stromversorgung des elektrischen Verbrauchers (22) verursacht, wenn sich der erste Förderer (2) jeweils an dem ersten und zweiten Statorring (401, 402) befindet.

3. Vorrichtung nach Anspruch 1 oder 2, **dadurch gekennzeichnet, dass** sich die Statormittel (40) von dem Linearmotor (30) unterscheiden.

4. Vorrichtung nach einem der Ansprüche 1 bis 3, **dadurch gekennzeichnet, dass** der Schieber (400) einem Querschnitt der Statormittel (40) zugewandt ist; die Statormittel (40) umfassen mindestens ein elektrisches Kabel (403) und der Schieber (400) erstreckt sich über mehr als 160° um einen Querschnitt des elektrischen Kabels (403).

5. Vorrichtung nach einem der Ansprüche 1 bis 4, **dadurch gekennzeichnet, dass** sich die Statormittel (40) über die gesamte Erstreckung des Wegs (3) erstrecken.

6. Vorrichtung nach einem der vorhergehenden Ansprüche, **dadurch gekennzeichnet, dass** die kontaktlosen Mittel (41) vom Typ mit magnetischer Induktion sind.

7. Vorrichtung nach einem der vorhergehenden Ansprüche, **dadurch gekennzeichnet, dass** der elektrische Verbraucher (22) nicht für die Verschiebung des ersten Förderers entlang des Weges (3) verantwortlich ist.

8. Vorrichtung nach einem der vorhergehenden Ansprüche, **dadurch gekennzeichnet, dass** der elektrische Verbraucher (22) Saugmittel (23) umfasst, die den Verpackungsartikel auf dem ersten Förderer (2) halten.

9. Vorrichtung nach einem der vorhergehenden Ansprüche, **dadurch gekennzeichnet, dass** sie umfasst:
- einen zweiten Förderer (5), der entlang des Wegs (3) beweglich ist und zweite Magnetfelderzeugungsmittel (51) umfasst; wobei der Linearmotor (30) mit den zweiten Magnetfelderzeugungsmitteln (51) zusammenwirkt, um eine Verschiebung des zweiten Förderers (5) entlang des Wegs (3) zu bewirken;
- Steuermittel (6) zum Steuern des Linearmotors (30), die eine unabhängige Bewegung des ersten und zweiten Förderers (2, 5) ermöglichen.

10. Vorrichtung nach einem der vorhergehenden Ansprüche, **dadurch gekennzeichnet, dass** der Weg (3) ein in sich geschlossener Stromkreis ist.

11. Förderverfahren zum Fördern eines Verpackungsartikels mittels einer Vorrichtung nach einem der Ansprüche 1 bis 10, **dadurch gekennzeichnet, dass** es umfasst:
- Positionieren eines Verpackungsartikels auf dem ersten Förderer (2);
- Aktivieren des Linearmotors (30) zum Bewegen des ersten Förderers (2);
- Übertragen elektrischer Energie über die kontaktlosen Mittel (41) an den ersten Förderer (2) und Versorgen des Verbrauchers (22) mit dieser elektrischen Energie.

## Revendications

1. Appareil de transport pour transporter un article d'emballage comprenant :
- un premier transporteur (2) destiné à déplacer ledit article d'emballage et comprenant des premiers moyens (21) de génération de champ magnétique et un consommateur (22) électrique ;
- un parcours (3) le long duquel le premier transporteur (2) est mobile, ledit parcours (3) comprenant un moteur (30) linéaire qui interagit avec lesdits premiers moyens (21) de génération de champ magnétique de manière à déterminer un déplacement linéaire du premier transporteur (2) le long dudit parcours (3) ; les moyens (21) de génération de champ magnétique comprenant/étant un aimant (210) permanent ; le moteur (30) linéaire comprend un stator qui se prolonge le long du parcours (3) ;
- des moyens (4) d'alimentation électrique pour alimenter ledit consommateur (22) électrique comprenant des moyens (41) d'alimentation électrique sans contact du premier transporteur (2) ; les moyens (41) sans contact comprennent à leur tour des moyens (40) statoriques qui se prolongent le long du parcours (3) et un curseur (400) étant solidement fixé au premier transporteur (2) et qui interagit avec les moyens (40) statoriques.

2. Appareil selon la revendication 1, **caractérisé en ce que** lesdits moyens (40) statoriques comprennent au moins un premier et un deuxième anneau (401, 402) statorique qui se prolongent en succession le long du parcours (3) ; le premier anneau (401) statorique étant alimenté indépendamment du deuxième anneau (402) statorique ; l'alimentation électrique des premier et deuxième anneaux (401, 402) statoriques déterminant l'alimentation électrique du consommateur (22) électrique situé sur le premier transporteur (2) lorsque le premier transporteur (2) est situé respectivement en correspondance des premier et deuxième anneaux (401, 402) statoriques ; l'absence d'alimentation électrique des premier et deuxième anneaux (401, 402) statoriques entraînant l'absence d'alimentation électrique du consommateur (22) électrique lorsque le premier transporteur (2) est situé respectivement en correspondance des premier et deuxième anneaux (401, 402) statoriques.

3. Appareil selon la revendication 1 ou 2, **caractérisé en ce que** les moyens (40) statoriques sont distincts du moteur (30) linéaire.

4. Appareil selon l'une quelconque des revendications 1 à 3, **caractérisé en ce que** le curseur (400) fait face à une section transversale des moyens (40) statoriques ; les moyens (40) statoriques comprennent au moins un câble électrique (403) et le curseur (400) se prolonge autour d'une section transversale du câble électrique (403) sur plus de 160°.

5. Appareil selon l'une quelconque des revendications de 1 à 4, **caractérisé en ce que** les moyens (40) statoriques se prolongent sur toute l'étendue du parcours (3).

6. Appareil selon l'une quelconque des revendications précédentes, **caractérisé en ce que** les moyens (41) sans contact sont du type à induction magnétique.

7. Appareil selon l'une quelconque des revendications précédentes, **caractérisé en ce que** ledit consommateur (22) électrique n'est pas responsable du déplacement du premier transporteur le long du parcours (3).

8. Appareil selon l'une quelconque des revendications précédentes, **caractérisé en ce que** ledit consommateur (22) électrique comprend des moyens (23) d'aspiration qui retiennent l'article d'emballage sur le premier transporteur (2).

9. Appareil selon l'une quelconque des revendications précédentes, **caractérisé en ce qu'**il comprend :
- un deuxième transporteur (5) mobile le long dudit parcours (3) et comprenant des deuxièmes moyens (51) de génération de champ magnétique ; ledit moteur (30) linéaire interagissant avec les deuxièmes moyens (51) de génération de champ magnétique afin de déterminer un déplacement du deuxième transporteur (5) le long dudit parcours (3) ;
- des moyens (6) de commande pour commander le moteur (30) linéaire qui permet un mouvement indépendant du premier et du deuxième transporteur (2, 5).

10. Appareil selon l'une quelconque des revendications précédentes, **caractérisé en ce que** ledit parcours (3) est un circuit fermé sur lui-même.

11. Procédé de transport d'un article d'emballage au moyen d'un appareil selon l'une quelconque des revendications 1 à 10, **caractérisé en ce qu'**il comprend :
- positionner un article d'emballage sur le premier transporteur (2) ;
- activer ledit moteur (30) linéaire pour déplacer le premier transporteur (2) ;
- transférer de l'énergie électrique via les moyens (41) sans contact au premier transporteur (2) et alimenter le consommateur (22) électrique avec ladite énergie électrique.
